# EUROPÄISCHE PATENTANMELDUNG

(11) **EP 3 121 466 A1**
(43) Veröffentlichungstag der Anmeldung: **25.01.2017**
(21) Anmeldenummer: 15177496.5
(22) Anmeldetag: 20.07.2015
(51) Int. Cl.: F16C 33/10, F16N 1/00, F16N 7/02

(54) **MASCHINENELEMENT**

(71) Anmelder: Siemens Aktiengesellschaft, 80333 München (DE)
(72) Erfinder: Meyer, Thomas, 52223 Stolberg (DE)

(57) **Zusammenfassung**

Es wird Maschinenelement mit einer über einen Ölzuführungskanal (3) mit Schmieröl versorgbaren Schmierstelle (13) beschrieben. Das Maschinenelement umfasst mindestens ein Ölreservoir (1, 2). Das Ölreservoir (1, 2) ist durch mindestens einen in dem Maschinenelement geformten Hohlraum gebildet. Außerdem weist das Ölreservoir (1, 2) mindestens einen Verbindungskanal (9) zu dem Ölzuführungskanal (3) und zu der Schmierstelle (13) auf.

## Beschreibung

Die vorliegende Erfindung betrifft ein Maschinenelement mit einer über einen Ölzuführungskanal mit Schmieröl versorgbaren Schmierstelle.

Maschinenelemente mit einer Schmierstelle wie einem Gleit- oder Wälzlager sind in verschiedenen Anwendungen unterschiedlichsten Betriebssituationen ausgesetzt. Im Stand der Technik sind z.B. für Gleitlager unterschiedliche Schmierungsarten bekannt, wie beispielsweise in der EP 2 383 480 A1 (Winergy AG) 02.11.2011 erläutert ist. Dabei kann nicht immer sichergestellt werden, dass eine Druck- und/oder Sumpfschmierung für alle Betriebszustände sicher funktioniert. Bei einer Druckschmierung wird Schmierstoff unter Druck in einem Schmierstoffkreislauf zu den Schmierstellen gefördert, in der Regel mittels einer Ölpumpe. Bei einer Sumpf- bzw. Tauchschmierung wird das Maschinenelement, z.B. ein Lager oder eine Verzahnung, durch den Ölsumpf geschmiert, der sich im Getriebe- bzw. Maschineninnenraum durch eine Ölbefüllung ausbildet. Hierbei taucht das Maschinenelement unterhalb des statischen bzw. dynamischen Ölstands im Getriebeinnenraum. Ein statischer Ölstand ergibt sich bei sehr kleinen Drehzahlen bzw. bei Stillstand der Rotationsbauteile im Getriebe bzw. Maschinengehäuse.

Zwar kann mit elektrisch betriebenen Schmieranlagen eine permanente Druckschmierung vorgesehen werden, jedoch mangelt es dieser Lösung an Redundanz: bei Ausfall der elektrischen Versorgung ist eine Mangelschmierung zu erwarten. Mechanische, durch drehende Bauteile eines Antriebsstrangs angetriebene Schmierstoffpumpen können hier teilweise Abhilfe schaffen, falls die Förderleistung der mechanischen Pumpe ausreichend ist. Dies ist nicht in jedem Anwendungsfall und Betriebszustand gewährleistet, insbesondere bei sehr geringen Drehzahlen und tiefen Temperaturen.

Aus dem Stand der Technik, z. B. US 1,370,641 A (Grant) 08.03.1921 oder DE 2045995 A (Klein, Schanzlin & Becker AG) 23.03.1972, sind hochgelegte Schmiermittelbehälter bekannt, die als Schmierstoffsammelvorrichtung dienen und die sich, unter anderem beim Anfahren oder bei einem Ausfall des Systemdrucks, über Gravitationskräfte entleeren und somit die Schmierstellen versorgen. Nachteilig sind derartige Schmiermittelbehälter, z.B. in Form von Stahlblechtanks, in Bezug die hohen Drücke im Schmierstoffsystem: sie neigen, aufgrund der großen Kraftangriffsflächen dieser Behälter, bei hohen Drücken und/oder tiefen Temperaturen im Schmierstoffsystem zum Zerbersten.

Es besteht daher Bedarf nach einer Notlaufschmierung, die bei zu geringem Systemdruck der Druckschmierung einer Schmierstelle eines Maschinenelements eine gewisse Zeit mit Schmierstoff benetzt, um Schäden zu vermeiden.

Diese Aufgabe wird durch ein Maschinenelement mit den in Anspruch 1 angegebenen Merkmalen gelöst.

Das Maschinenelement weist eine Schmierstelle auf, welche über einen Ölzuführungskanal mit Schmieröl versorgbar ist. Eine Schmierstelle ist eine zu schmierende Stelle des Maschinenelements, d.h. eine mit Schmieröl zu versorgende Stelle; wird die Schmierstelle über einen längeren Zeitraum mit Schmieröl unterversorgt, führt das regelmäßig zu einer Schädigung des Maschinenelements, z.B. erhöhtem Abrieb oder Fressen. Das Maschinenelement umfasst mindestens ein Ölreservoir, d.h. einen Hohlraum zur Aufnahme von Schmieröl. Das Ölreservoir ist durch mindestens einen in dem Maschinenelement geformten Hohlraum gebildet und weist mindestens einen Verbindungskanal zu dem Ölzuführungskanal, und damit zu der Schmierstelle, auf.

Der Begriff "Maschinenelement" umfasst Maschinenbauteile und Konstruktionselemente, z.B. Bauteilverbindungen, Kupplungen und Bremsen, Wälzlager, Gleitlagerungen, Getriebebauteile. Die Begriffe "Öl" oder "Schmieröl" sind hier so verwendet, dass sie ganz allgemein auch andere flüssige Schmierstoffe umfassen; somit sind die Begriffe "Öl" bzw. "Schmieröl" synonym zu "Schmierstoff" verwendet.

Bei dem Maschinenelement nutzt man die Erkenntnis, dass die Notschmierung von Schmierstellen wesentlich verbessert werden kann, indem man in das die Schmierstelle aufweisende Maschinenelement, vorzugsweise in unmittelbarer Nähe zu den Schmierstellen, einen Ölsammelbehälter, d.h. ein Ölreservoir, integriert, welcher sich im Normalbetrieb der Schmieranlage mit Öl füllen kann. Bei einem Ausfall der Schmieranlage kann weiterhin Schmierstoff aus dem Ölreservoir der Schmierstelle zugeführt werden, um die Schmierstelle mit Schmierstoff zu benetzen.

Im Normalbetrieb der Schmieranlage wird Schmieröl durch den Ölzuführungskanal zu der Schmierstelle gefördert. Die Förderung des Schmieröls kann dabei mittels einer Druckpumpe erfolgen, die den Ölzuführungskanal mit Drucköl, d.h. unter Atmosphärenüberdruck stehendem Schmieröl, beaufschlagt. Über den Verbindungskanal, der zwischen dem Ölzuführungskanal und dem Ölreservoir existiert, gelangt im Normalbetrieb Schmieröl in das Ölreservoir. Bei einem Ausfall der Schmieranlage ist die normale Förderung von Schmieröl zu der Schmierstelle unterbrochen. Dies kann z.B. der Fall sein, wenn die Spannungsversorgung der Druckpumpe ausfällt. Als Konsequenz sinkt der Öldruck in dem Ölzuführungskanal; dadurch kann das im Normalbetrieb in dem Ölreservoir gespeicherte Schmieröl über den Verbindungskanal, der zwischen dem Ölreservoir und der Schmierstelle existiert, austreten und zu der Schmierstelle gelangen.

Ein Einsatzgebiet der vorliegenden Erfindung zur Notschmierung sind industriellen Antriebsstränge und Antriebsstränge in Windkraftanlagen, in denen Schmierstellen vorhanden sind, z.B. Gleit- und Wälzlager zur Lagerung von Wellen und Rotoren, Verzahnungen und andere zu schmierende Maschinenelemente. Damit kann eine Notlaufschmierung und andere Schmierungsaufgaben unter erschwerten Mischreibungsbedingungen, wie zum Beispiel Trudel-, Wartungs- und Installationsbetrieb, gelöst werden. Auch sonstige nicht-hydrodynamische Betriebszustände oder eine Schmierung während eines Transports können zuverlässig versorgt werden.

Die Erfindung bringt den Vorteil, dass Einlaufbeschichtungen, Notlaufbeschichtungen oder Anti-friction-layer nicht nötig sind, da eine zuverlässige Benetzung der Schmierstellen mit Schmieröl garantiert werden kann. Die vorliegenden Erfindung bildet also ein redundantes Schmiersystem, so dass ein Drehen eines Antriebsstrangs auch ohne eine angeschlossene Schmieranlage, d.h. ohne Druckversorgung, ermöglicht wird.

Ein Zerbersten des Ölreservoirs, wie bei herkömmlichen Stahlblechkonstruktionen, ist nicht zu erwarten. Der Grund hierfür ist das relativ kleine Volumen des Ölreservoirs im Verhältnis zu der, aufgrund der Integration der Ölreservoire in das Maschinenelement, umgebenden dickwandigen Struktur. Im Gegensatz dazu weisen die herkömmlichen Stahlblechbehältnisse eine relativ geringe Wandstärke (übliche Blechdicke) sowie große Flächen auf, die bei hohen Drücken mit hohen Kräften beaufschlagt werden.

Ausgestaltungen und Weiterbildungen der Erfindung sind in den abhängigen Ansprüchen angegeben.

Gemäß einer Ausgestaltung weist das Ölreservoir eine Ent- und/oder Belüftungsöffnung, auch als Drosselbohrung bezeichnet, auf. Eine Entlüftungsöffnung in der das Ölreservoir umschließenden Wandung sorgt dafür, dass sich beim Einfließen des Schmieröls in das Ölreservoir in dem Ölreservoir kein Luftpolster bildet, welches einen gegen das Einfließen des Schmieröls in das Ölreservoir wirkenden Gegendruck bilden würde. Es ist möglich, dass die Entlüftungsöffnung oberhalb des sich im Ölreservoir einstellenden Ölniveaus liegt. Eine Belüftungsöffnung in der das Ölreservoir umschließenden Wandung sorgt dafür, dass sich beim Ausfließen des Schmieröls aus dem Ölreservoir in dem Ölreservoir oberhalb des Ölniveaus kein Luftvakuum bildet, welches gegen das Ausfließen des Schmieröls aus das Ölreservoir einen Gegendruck bilden würde. Vorzugsweise liegt die Belüftungsöffnung oberhalb des sich im Ölreservoir einstellenden Ölniveaus. Dabei ist eine Entlüftungsöffnung auch als Belüftungsöffnung nutzbar, und umgekehrt. Über unterschiedlich dimensionierte Drosselbohrungen lässt sich die zeitliche Befüllung und Entleerung des Ölreservoirs einstellen.

Gemäß einer Ausgestaltung ist der Hohlraum durch mindestens einen Bohrkanal gebildet. Bohrlöcher sind in einem Maschinenelement, z.B. aus Stahl, relativ einfach herzustellen; somit kann mittels Bohrens der Hohlraum zur Speicherung von Schmieröl, d.h. das Ölreservoir, schnell und kostengünstig ausgebildet werden.

Gemäß einer Ausgestaltung ist der Bohrkanal an mindestens einem Ende mit einem Verschlussstopfen, z.B. aus Kunststoff, verschlossen. Dadurch kann aus einem Bohrloch, entweder einem durchgehenden oder einem als Sackloch ausgebildeten Bohrloch schnell und einfach ein geschlossener Hohlraum gebildet werden.

Gemäß einer Ausgestaltung weist der Verschlussstopfen eine Ent- und/oder Belüftungsöffnung, auch als Drosselbohrung bezeichnet, auf. In diesem Fall erfüllt der Verschlussstopfen zwei Funktionen: zum Einen verschließt er ein Bohrloch, so dass ein als Ölreservoir dienender Hohlraum gebildet wird, zum Anderen erfüllt er die Funktion einer Ent- und/oder Belüftungsöffnung. Auf eine Ausbildung einer separaten Ent- und/oder Belüftungsöffnung kann somit verzichtet werden. Über unterschiedlich dimensionierte Drosselbohrungen lässt sich die zeitliche Befüllung und Entleerung des Ölreservoirs einstellen.

Gemäß einer Ausgestaltung ist das Maschinenelement als ein Gleitlager ausgebildet, umfassend eine das Ölreservoir enthaltende Stützschicht, auf welcher eine die Schmierstelle bildende Gleitschicht angeordnet ist. Das Gleitlager umfasst somit eine Stütz- und eine Gleitschicht.

Es ist möglich, dass das Maschinenelement mehrere separate Ölreservoire aufweist, welche mithilfe von Verbindungskanälen miteinander verbunden sind und somit kommunizierende Gefäße bilden. Mittels mehrerer Ölreservoire kann auf diese Weise ein Ölvolumen von dem 4-fachen bis 20-fachen des Ölvolumens im gefüllten Lagerspalt der Schmierstelle bereitgestellt werden. Dies reicht aus, um über einen längeren Zeitraum eine Ölbenetzung der zu schmierenden Funktionsflächen während eines Wartungsbetriebs, einer Installation oder eines Trudelbetriebs sicherzustellen.

Gemäß einer Ausgestaltung weist das Maschinenelement ein Bauteil und ein an dem Bauteil angeordnetes Gleitlager auf. Dabei weist das Bauteil ein erstes Ölreservoir und das Gleitlager eine ein zweites Ölreservoir enthaltende Stützschicht auf. Auf der Stützschicht ist eine die Schmierstelle bildende Gleitschicht angeordnet.

Der oder die das Ölreservoir bildenden Hohlräume können bezüglich des Ölzuführungskanals symmetrisch oder asymmetrisch angeordnet sein.

Diese Aufgabe wird außerdem durch ein Verfahren zur Versorgung einer Schmierstelle eines Maschinenelements mit Schmieröl gelöst. Die Schmierstelle wird in einem Notbetrieb aus einem Ölreservoir mit Schmieröl versorgt. Dabei ist das Ölreservoir durch mindestens einen in dem Maschinenelement geformten Hohlraum gebildet und weist mindestens einen Verbindungskanal zu dem Ölzuführungskanal auf. Das Ölreservoir wird während eines Normalbetriebs mit Schmieröl gefüllt.

Im Folgenden wird die Erfindung anhand mehrerer Ausführungsbeispiele unter Zuhilfenahme der Zeichnung erläutert. Es zeigt jeweils schematisch und nicht maßstabsgetreu
- Fig. 1: einen Schnitt durch ein erstes Gleitlager; und
- Fig. 2: einen Schnitt durch ein weiteres Gleitlager.

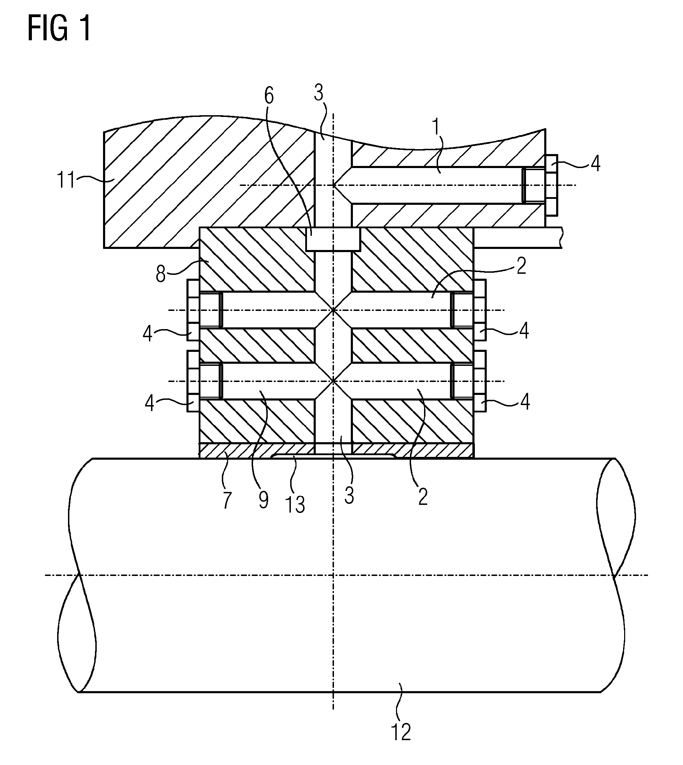

Fig. 1 zeigt eine Welle 12, welche mittels eines Gleitlagers 7, 8, umfassend eine ringförmige Stützschicht 8 und eine radial innerhalb der Stützschicht 8 angeordnete ringförmige Gleitschicht 7, in einem Gehäuse 11, z.B. an einem als Stützelement ausgebildeten Gehäuseteil im Inneren des Gehäuses 11, drehbar gelagert ist. Ein durch das Gehäuse 11 führender Ölzuführungskanal 3 verläuft über eine im Außenumfang der Stützschicht 8 angeordnete Ringnut 6 und durch die Stützschicht 8 bis zu der Gleitschicht 7. Der radial durch das Gleitlager 7, 8 verlaufende Ölzuführungskanal 3 mündet an einer inneren Oberfläche der Gleitschicht 7, wo die Gleitschicht 7 an einer Umfangfläche der Welle 12 anliegt. Beim Normalbetrieb der Schmieranlage fördert eine nicht dargestellte Druckpumpe Schmieröl aus einem Ölsumpf durch den Ölzuführungskanal 3 bis zur Kontaktstelle von Gleitschicht 7 und Welle 12, wo sich die Schmierstelle 13 des Gleitlagers 7, 8 befindet.

Bei dem erfindungsgemäßen Gleitlager weist die Stützschicht 8 zwei axiale, als Durchgangsbohrungen ausgebildete Bohrkanäle 2 auf, welche den Ölzuführungskanal 3 lotrecht schneiden. Die Bohrkanäle 2 sind auf ihrer rechten Seite jeweils mit luftdichten Verschlusstopfen 4 und auf ihrer linken Seite jeweils mit Entlüftungsöffnungen aufweisenden Verschlusstopfen 4 verschlossen. Zusätzlich ist in das als Stützelement ausgebildete Gehäuseteil im Inneren des Gehäuses 11 ein quer zum Ölzuführungskanal 3 verlaufender und sich bis zum Ölzuführungskanal 3 erstreckender Bohrkanal 1 eingebohrt, welcher mit einem eine Entlüftungsöffnung aufweisenden Verschlusstopfen 4 verschlossen ist.

Auf diese Weise bilden die beiden Bohrkanäle 2 in der Stützschicht 8 sowie der Bohrkanal 1 in dem Gehäuse 11 Ölreservoire, welche über Verbindungskanäle, welche in dem vorliegenden Fall durch die Bohrkanäle 1, 2 selbst gebildet sind, jeweils mit dem Ölzuführungskanal 3 verbunden und mittels des Ölzuführungskanals 3 auch mit der Schmierstelle 13 des Gleitlagers 7, 8 verbunden sind.

Sinkt der Druck in dem Ölzuführungskanal 3, z.B. aufgrund eines Ausfalls der den Ölzuführungskanal 3 beaufschlagenden Öldruckpumpe, so fließt Öl aus den Ölreservoiren 1, 2 und aufgrund der Gravitation zu der Schmierstelle 13 des Gleitlagers 7, 8.

Da eine Ölbenetzung der Funktionsflächen der Schmierstelle 13 des Gleitlagers 7 ausreicht, um Fressschäden zu vermeiden, also zur Vermeidung von Fressschäden nur relativ geringe Mengen an Öl benötigt werden, kann das Volumen der Schmiermittelreservoire 1 und 2 relativ klein gewählt werden. Es hat sich gezeigt, dass in dem Maschinenelement angeordnete Ölreservoire ausreichen, um unter Betriebsbedingungen eine Notfallschmierung aufrecht erhalten zu können. Durch ihre Lage in der Stützschicht 8, welche z.B. als Stahlring vorliegt, oder in unmittelbarer Nähe der Stützschicht 8, im Getriebegehäuse 11, ist die zu überbrückende Entfernung der Ölreservoire 1, 2 zu der Schmierstelle 13 relativ gering.

Ein Zerbersten der Ölreservoire, wie bei herkömmlichen Stahlblechkonstruktionen, ist nicht zu erwarten. Der Grund hierfür ist das relativ kleine Volumen der als Ölreservoire fungierenden Bohrungen im Stahlkörper 8 oder im Gehäuse 11 im Verhältnis zu der, aufgrund der Integration der Ölreservoire in das Maschinenelement, umgebenden dickwandigen Stahlstruktur. Im Gegensatz dazu weisen die herkömmlichen Stahlblechbehältnisse eine relativ geringe Wandstärke (übliche Blechdicke) sowie große Flächen auf, die bei hohen Drücken mit hohen Kräften beaufschlagt werden.

Die Bohrungen 1 und 2 sind oberhalb der Schmierstelle 13 des Gleitlagers angeordnet, so dass über Gravitationskräfte und den Saugeffekt einer drehenden Welle 12 Schmierstoff in den Lagerspalt 13 gelangt. Die Ölreservoire 1, 2 sind mit dem Ölzuführungskanal 3 der Druckschmierungsversorgung verbunden. Die Bohrungen 1 und 2 sind dabei gegen einen ungewollten Austritt von Schmiermittel verschlossen, z.B. durch Verschlussstopfen 4, und verfügen über eine Be-/Entlüftung. Die Be- und Entlüftung kann über entsprechend dimensionierte Drosselbohrungen in den Verschlussstopfen 4 der Bohrungen 1 und 2 hergestellt werden. Auf diese Weise ist ein Ein- und Ausfließen von Schmierstoff in bzw. aus den Ölreservoiren 1, 2 über den Ölzuführungskanal 3 sichergestellt ist.

Es können mehrere Bohrungen 2 in Umfangsrichtung in der Stützschicht 8 angeordnet sein, die mit dem Ölzuführungskanal 3 verbunden sind. Somit kann das Volumen des Ölreservoirs 1, 2 dem individuellen Ölbedarf der Schmierstelle angepasst werden. Mittels mehrerer Ölreservoire kann ein Ölvolumen von dem 4-fachen bis 20-fachen des Ölvolumens im gefüllten Lagerspalt 13 bereitgestellt werden. Dies reicht aus, um über einen längeren Zeitraum von mehreren Stunden bis mehreren Tagen eine Ölbenetzung der Funktionsflächen 13 während des Wartungsbetriebs, Installation oder Trudelbetriebs sicherzustellen.

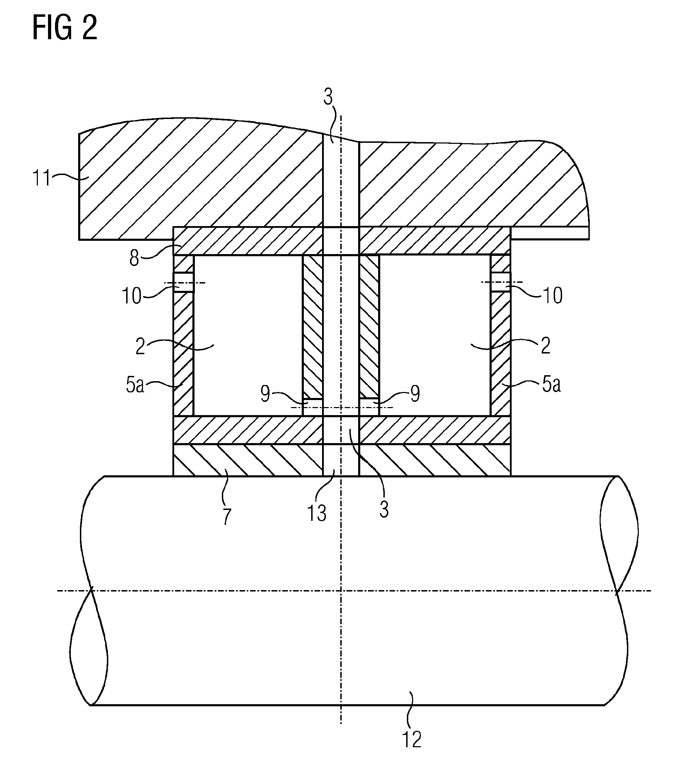

Fig. 2 zeigt einen Schnitt durch ein weiteres Gleitlager 7, 8. Dabei ist, ähnlich zu dem in Fig. 1 gezeigten Lager, eine Welle 12, welche mittels eines Gleitlagers, umfassend eine ringförmige Stützschicht 8 und eine radial innerhalb der Stützschicht 8 angeordnete ringförmige Gleitschicht 7, in einem Gehäuse 11 drehbar gelagert. Ein durch das Gehäuse 11 führender Ölzuführungskanal 3 verläuft durch die Stützschicht 8 bis zu der Gleitschicht 7. Der radial durch das Gleitlager 7, 8 verlaufende Ölzuführungskanal 3 mündet an einer inneren Oberfläche der Gleitschicht 7, wo die Gleitschicht 7 an der Umfangfläche der Welle 12 anliegt. Beim Normalbetrieb der Schmieranlage fördert eine nicht dargestellte Druckpumpe Schmieröl aus einem Ölsumpf durch den Ölzuführungskanal 3 bis zur Kontaktstelle von Gleitschicht 7 und Welle 12, wo sich die Schmierstelle 13 des Gleitlagers 7, 8 befindet.

Bei dem Gleitlager 7, 8 weist die Stützschicht 8 zwei Hohlräume 2 auf, welche symmetrisch zu beiden Seiten des Ölzuführungskanals 3 angeordnet sind. Dadurch kann pro Volumeneinheit ein größeres Ölreservoir ausgebildet werden als mit der in Fig. 1 dargestellten Lösung, welche axial verlaufende Bohrlöcher einsetzt. Die Hohlräume 2 in der als Stahlkörper ausgebildeten Stützschicht 8 sind jeweils mit einer in den Ölzuführungskanal 3 mündenden, im Bodenbereich der Hohlräume 2 angeordneten Ablaufbohrung 9 und einer im vertikal oberen Bereich der Hohlräume 2 angeordneten Be- und Entlüftungsöffnung 10 versehen. Die Hohlräume 2 können aus einem als Stützschicht fungierenden Ring "aus dem Vollen" gefräst werden; es ist auch denkbar, dass die Stützschicht aus Einzelteilen zusammengesetzt ist, umfassend zwei die Hohlräume nach außen abschließende ringförmige Stirnseiten-Elemente 5a.

Die Be- und Entlüftungsöffnungen 10 können hinsichtlich des hydraulischen und aerostatischen Widerstands einstellbar, temperatur- oder druckeinstellbar sein. Auch Rückschlagventile und Druckbegrenzungsventile können hierbei zum Einsatz kommen.

Die relativ großen, als Ölreservoir dienenden Hohlräume 2, welche in der in Fig. 2 dargestellten Notschmierlösung gezeigt sind, wirken auf das Maschinenelement stabilisierend und dämpfend. Druckschwankungen im Ölverteilsystem werden durch die Hohlräume ebenfalls vermindert.

## Patentansprüche

1. Maschinenelement mit einer über einen Ölzuführungskanal (3) mit Schmieröl versorgbaren Schmierstelle (13), umfassend mindestens ein Ölreservoir (1, 2), welches durch mindestens einen in dem Maschinenelement geformten Hohlraum gebildet ist und mindestens einen Verbindungskanal (9) zu dem Ölzuführungskanal (3) aufweist.

2. Maschinenelement nach Anspruch 1, wobei das Ölreservoir (1, 2) eine Ent- und/oder Belüftungsöffnung (10) aufweist.

3. Maschinenelement nach einem der Ansprüche 1 und 2, wobei der Hohlraum durch mindestens einen Bohrkanal gebildet ist.

4. Maschinenelement nach Anspruch 3, wobei der Bohrkanal an mindestens einem Ende mit einem Verschlussstopfen (4) verschlossen ist.

5. Maschinenelement nach Anspruch 4, wobei der Verschlussstopfen (4) eine Ent- und/oder Belüftungsöffnung aufweist.

6. Maschinenelement nach einem der Ansprüche 1 bis 5, wobei das Maschinenelement als ein Gleitlager (7, 8) ausgebildet ist, umfassend eine das Ölreservoir (2) enthaltende Stützschicht (8), auf welcher eine die Schmierstelle (13) aufweisende Gleitschicht (7) angeordnet ist.

7. Maschinenelement nach einem der Ansprüche 1 bis 5, wobei das Maschinenelement ein Bauteil (11) und ein an dem Bauteil (11) angeordnetes Gleitlager (7, 8) aufweist, wobei das Bauteil (11) ein erstes Ölreservoir (1) aufweist und wobei das Gleitlager (7, 8) eine ein zweites Ölreservoir (2) enthaltende Stützschicht (8) aufweist, auf welcher eine die Schmierstelle (13) bildende Gleitschicht (7) angeordnet ist.

8. Verfahren zur Versorgung einer Schmierstelle (13) eines Maschinenelements mit Schmieröl, wobei die Schmierstelle in einem Notbetrieb aus einem Ölreservoir (1, 2), welches durch mindestens einen in dem Maschinenelement geformten Hohlraum gebildet ist und mindestens einen Verbindungskanal (9) zu dem Ölzuführungskanal (3) aufweist, mit Schmieröl versorgt wird, wobei das Ölreservoir (1, 2) während eines Normalbetriebs mit Schmieröl gefüllt wird.
